(19) **Europäisches Patentamt / European Patent Office / Office européen des brevets**

(11) **EP 1 631 420 B1**

(12) **EUROPEAN PATENT SPECIFICATION**

(45) Date of publication and mention of the grant of the patent:
**28.07.2010 Bulletin 2010/30**

(21) Application number: **04754593.4**

(22) Date of filing: **04.06.2004**

(51) Int Cl.:
**B25B 29/02** *(2006.01)* **B23P 11/02** *(2006.01)*

(86) International application number:
**PCT/US2004/018026**

(87) International publication number:
**WO 2004/108360 (16.12.2004 Gazette 2004/51)**

(54) **BOLTED ASSEMBLY AND APPARATUS AND METHOD FOR TENSIONING THE BOLTED ASSEMBLY**

BOLZENVERBINDUNG SOWIE VORRICHTUNG UND METHODE ZUM SPANNEN DER BOLZENVERBINDUNG

ENSEMBLE BOULONNE ET APPAREIL ET PROCEDE DE TENSIONNEMENT DE L'ENSEMBLE BOULONNE

(84) Designated Contracting States:
**DE FR GB IT**

(30) Priority: **06.06.2003 US 456038**
**01.10.2003 US 507795 P**

(43) Date of publication of application:
**08.03.2006 Bulletin 2006/10**

(73) Proprietor: **Siemens Energy, Inc.**
**Orlando, FL 32826-2399 (US)**

(72) Inventor: **GOSLING, Martin, Charles**
**Burnstown, Ontario K0J 1G0 (CA)**

(74) Representative: **Morgan, Marc**
**Siemens Shared Services**
**Siemens AG**
**Postfach 22 16 34**
**80506 München (DE)**

(56) References cited:
**DE-A- 4 443 238    FR-A- 902 682**

- **PATENT ABSTRACTS OF JAPAN vol. 0080, no. 50 (M-281), 7 March 1984 (1984-03-07) -& JP 58 203214 A (MITSUBISHI JUKOGYO KK), 26 November 1983 (1983-11-26)**
- **BUDIG R ET AL: "FLUESSIGES HAELT FEST. FUNKTIONSSICHERHEIT VON DRUCKOELVERBAENDEN BESTIMMT DETAILS" MECHANISCHE VERBINDUNGSTECHNIK, VDI VERLAG. DUSSELDORF, DE, vol. 13, no. 4, 1989, page 21, XP000104366 ISSN: 0720-9886**
- **PATENT ABSTRACTS OF JAPAN vol. 1998, no. 12, 31 October 1998 (1998-10-31) -& JP 10 184651 A (DAIWA RASHI:KK), 14 July 1998 (1998-07-14)**

**Description**

FIELD OF THE INVENTION

This application relates generally to the field of fasteners, and more specifically to an apparatus and method for tensioning a bolt, stud or similar tension member.

BACKGROUND OF THE INVENTION

A variety of tensioning systems have been devised for imparting a desired amount of closing force to a bolted flange arrangement. For example, a nut may be tightened onto a bolt with a predetermined amount of torque. The accuracy of this method depends upon knowing the amount of friction developed between the nut and the underlying surface, among other factors.

Hydraulic tensioning systems are used to apply a predetermined amount of tensile force to a bolt, with a nut then being positioned on the bolt to maintain the tensile force after the hydraulic tensioning system is removed. The amount of tensile force may be determined by measuring the pressure in the hydraulic system or by measuring the elongation of the bolt. The reactive load applied by a hydraulic tensioning system is carried to the underlying flange surface through a stand that surrounds the bolt and nut. Once the bolt is stretched to a desired tension, the nut is turned down onto the flange with a predetermined amount of torque. Access to the nut is provided through windows formed in the stand. When the tensioner is depressurized, the compressive load in the stand is transferred to the nut. This process may be repeated a second or more times to ensure that the proper amount of pre-load is maintained in the bolt because the nut may "settle in" when it first receives the compressive load from the stand, thereby somewhat relaxing the pre-load on the bolt. Such systems are available through Hydraulics Technology, Inc. (www.htico.com)

In applications where there is insufficient room to use a hydraulic tensioning system, a special hydraulic nut may be used. A hydraulic nut includes an internal piston/cylinder arrangement that allows the nut to expand axially in response to an applied hydraulic pressure, thereby tensioning the engaged bolt. A mechanical portion of the nut is then tightened to hold the nut in its expanded condition after the hydraulic pressure is removed. Such devices are expensive and may depend upon highly precise metal-to-metal seals for high temperature applications. Such devices are available through Riverhawk Company. (www.riverhawk.com)

An alternative to the hydraulic nut is the jackbolt tensioner. A torque nut is applied to a hand-tight condition. A plurality of jackbolts are threaded through the torque nut to push the torque nut away from the flange surface to tension the bolt. A hardened washer is placed between the jackbolts and the flange surface to protect against harmful load concentrations. Such devices are available through Superbolt, Inc. (www.superbolt.com)

JP 58-203214 discloses an arrangement for ensuring a good interference fit by hydraulically expanding a hole to accept a shaft and pressing the shaft into the hole before releasing the pressure.

According to the invention there is provided a tensioning apparatus and method as recited in the independent claims.

BRIEF DESCRIPTION OF THE DRAWINGS

These and other advantages of the invention will be more apparent from the following description in view of the drawings. A reference numeral may be repeated in more than one drawing for depicting similar structures.

FIG. 1 is an exploded view of a tensioning apparatus including an annular nut member attachable to a shank member by an interference fit.

FIG. 2 is an expanded view of the details of a fluid passageway formed in the annular nut member of FIG. 1.

FIG. 3 is a sectional view of a tensioning apparatus being installed onto a flange assembly using a hydraulic tensioner that applies the tensile force through the unthreaded annular nut member.

FIG. 4 is an exploded view of a tensioning apparatus including a shank member having a fluid passageway used for selectively expanding and an interference fit with an annular member.

FIG. 5 illustrates a tensioning apparatus including a shank member having a fluid passageway opening into a groove formed in the bore of an annular member.

FIG. 6 is a cross-sectional view of a low-profile tensioner bearing upon an annular member to perform a tensioning operation while the annular member is expanded to relax its interference fit with a shank member.

FIG. 7 is a cross-sectional view of an annular member having a plurality of grooves along its bore and having seals at opposed ends of the bore.

FIG. 8 is a sectional view of a tensioning apparatus being powered by a single source of high-pressure fluid selectively fluidly connected to the annular member and/or to the tensioner through valves.

FIG. 9 illustrates a method of tensioning a shank using the system of FIG. 8.
FIG. 10 is a schematic illustration of a tensioning system using an oil/water converter.
FIG. 11 is a plan view of a shank and annular member illustrating the locations of fluid passageways.

DETAILED DESCRIPTION OF THE INVENTION

The term "shank member" when used herein is meant to include elongated tension members such as bolts, studs, rods and the like whether or not they include an integral head or threads. A shank member has opposed ends, with each end having a mechanism for applying respectively opposed forces across a joint to produce a tension load in the shank. Such mechanisms may include an integral head or threads for threaded connection with a threaded nut. The term "nut" when used herein is meant to include an annular member defining an opening for receiving a shank member. The term nut is generally used in the art to denote an annular member having threads formed on its inside surface for threaded engagement with a shank member. However, in the present application, the term nut may also be used to denote an annular member having no threads on its inside surface, but rather being engaged with a shank member by an interference fit.

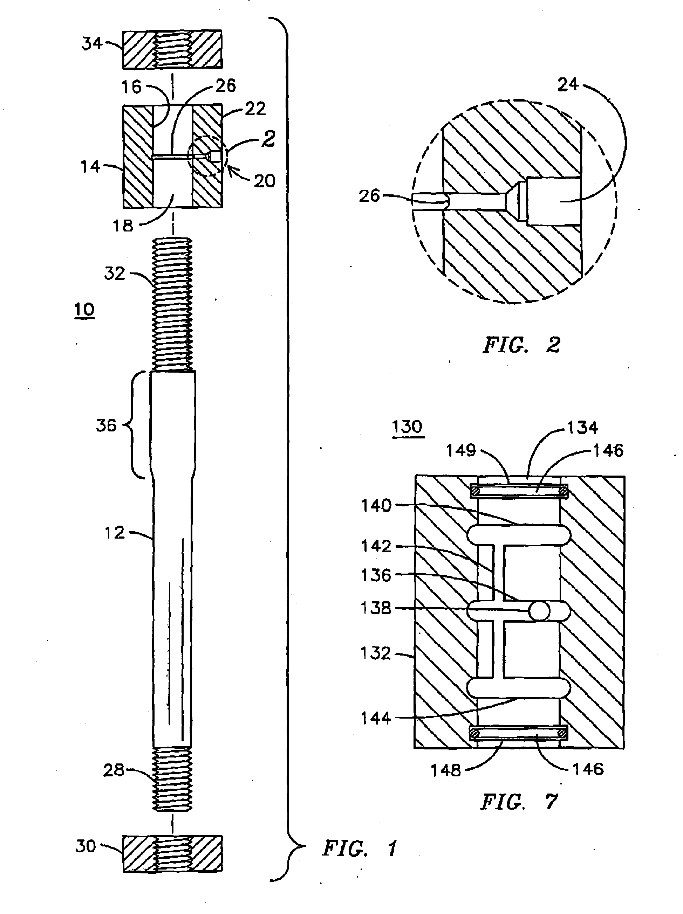

FIG. 1 illustrates a tensioning apparatus 10 including a shank member 12 and an annular member 14. The annular member 14 has an unthreaded inside surface 16 defining an opening 18 for receiving the shank member 12, with the opening 18 being sized to provide an interference fit connection; between the annular member 14 and an unthreaded critical diameter portion 36 of the shank member 12. The shank member 12 functions as a stud and the annular member 14 functions as a nut because it grips the stud to transfer a tensile force across a flanged joint (not shown). However, the shank member 12 and annular member 14 lack the mating threads that are normally found in a typical prior art stud/nut arrangement. Rather, the interference fit between the shank member 12 and the annular member 14 provides sufficient friction for resisting relative motion there between when the shank member 12 is placed into tension between the annular member 14 and a threaded nut 30 on an opposed side of the joint.

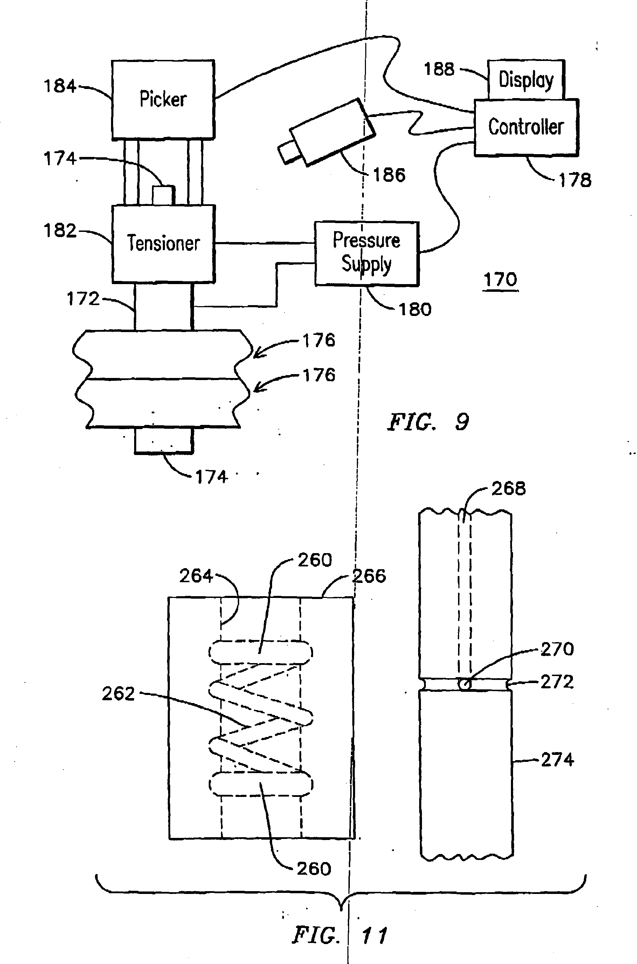

In order to facilitate a flange tensioning process using the tensioning apparatus 10, a means is provided for conveying fluid pressure into the opening 18 to selectively expand the annular member 14 to relax the interference fit, thus selectively allowing relative motion between the annular member 14 and the shank member 12 while the shank member 12 is being pre-tensioned. One such means is illustrated in FIG. 1 as a fluid passageway 20 formed through the annular member 14 from an outside surface 22 of the annular member 14 to the inside surface 16. As can be seen most clearly in the expanded view provided in FIG. 2, fluid passageway 20 includes a hole 24 formed from the outside surface 22 to the inside surface 16 and a groove 26 formed along the inside surface 16 to be in fluid communication with the hole 24. The hole 24 is connected to a supply of pressurized fluid. Groove 26 extends 360° around the circumference of opening 18 to apply the fluid pressure evenly around the circumference of the inner surface 16. One or a plurality of interconnected grooves 26 may be formed along the inside surface 16 to direct the fluid pressure across an appropriate area of the inside surface 16 so that the annular member 14 may be selectively expanded an amount sufficient to allow movement along shank member 12 without creating unacceptably high stress concentrations within the annular member 14 or shank member 12. In one embodiment, groove 26 may be formed in a single plane lying generally perpendicular to the axis of the shank member 12. In another embodiment, the groove may have a spiral shape deviating somewhat above and below such a plane at various points about the circumference of the inside surface 16. Alternatively, as illustrated in FIG. 11, two spaced apart circumferential grooves 260 may be joined by a helical shaped groove 262 formed on the inside surface 264 of the annular member 266, with the fluid pressure being supplied either through a hole formed in the annular member or through a longitudinal hole 268 in fluid communication with a radial hole 270 and mating outside surface groove 272 formed on the shank member 274.

Tensioning apparatus 10 may be made from any appropriate material and may have any size required for a particular application, using materials and stress calculations known in the art. A desired clamping force across the joint is generally determined first, then a size and material selected for shank member 12 to accommodate the clamping force. In this embodiment, shank member is formed as a stud with no integral head. Threads 28 are formed on a first end of shank member 12 for receiving a mating threaded nut 30. Alternatively, an integral bolt head (not shown) may be formed on this end of the shank member 12. Threads 32 are also formed on the opposed second end of shank member 12 for engagement with a hydraulic tensioner, as will be described more fully below. These threads 32 may also be used to engage a threaded lock nut 34 positioned to be in contact with the annular member 14 as a secondary back-up support in the event of slippage of the interference fit once the shank member 12 is tensioned against the annular member 14.

A portion 36 of the shank member 12 where the annular member 14 will reside during use will have an outside diameter that interfaces with the corresponding inside diameter of the opening 18 to establish the desired interference fit during use of the tensioning apparatus 10. The mating portion 36 of the shank member 12 may be finished machined to a desired diameter with a desired surface finish, and then the bore opening 18 of the annular member 14 may be ground to suit so that the interference fit can be carefully controlled. Alternatively, the diameter of the shank member 12 may be controlled to match the inside bore opening 18 of an annular member 14. In an exemplary embodiment using a shank member 12 having a diameter of approximately 1.5 inches, the diameter of opening 18 (excluding the groove 26) may be formed to a diameter that is between 0,088-0,094 mm (0.0035-0.0037 inches) less than portion 36 of the shank member (nominal 3.6 mils interference). Interference fits of 0,025-0,102 mm (0.001-0.004 inch) per 25,4 mm (inch) of stud diameter may typically be used depending upon the application. The interference is selected to provide sufficient frictional resistance plus a desired margin to adequately support the shank pre-load once the tensioning apparatus 10 is assembled and tensioned across a joint. The necessary interference may be calculated by one skilled in the art using known Compound Thick Cylinder Theory calculations as are explained in many mechanics textbooks. (for example, "The Mechanics of Materials" by Lancaster & Mitchell, published by McGraw-Hill Publishing Company, 1967) The initial assembly of the annular member 14 onto the shank member 12 can be accomplished at the point of manufacture or elsewhere by heating the annular member 14 (and/or cooling the shank member 12) a sufficient amount to allow thermal expansion/contraction to overcome the interference and to allow the annular member 14 to be positioned over the critical diameter portion 36. Once the parts thermally equilibrate to ambient temperature, the interference fit is reestablished. Once the annular member 14 is fit onto the shank member 12, the important surfaces 16, 36 are protected from damage due to mishandling. A thermal gradient may be used to relax the interference fit during the pre-loading of the tensioning apparatus 10 in lieu of a pressure gradient, however, the simplicity, speed and controllability of a pressure-based system makes it preferred over such a temperature-based system.

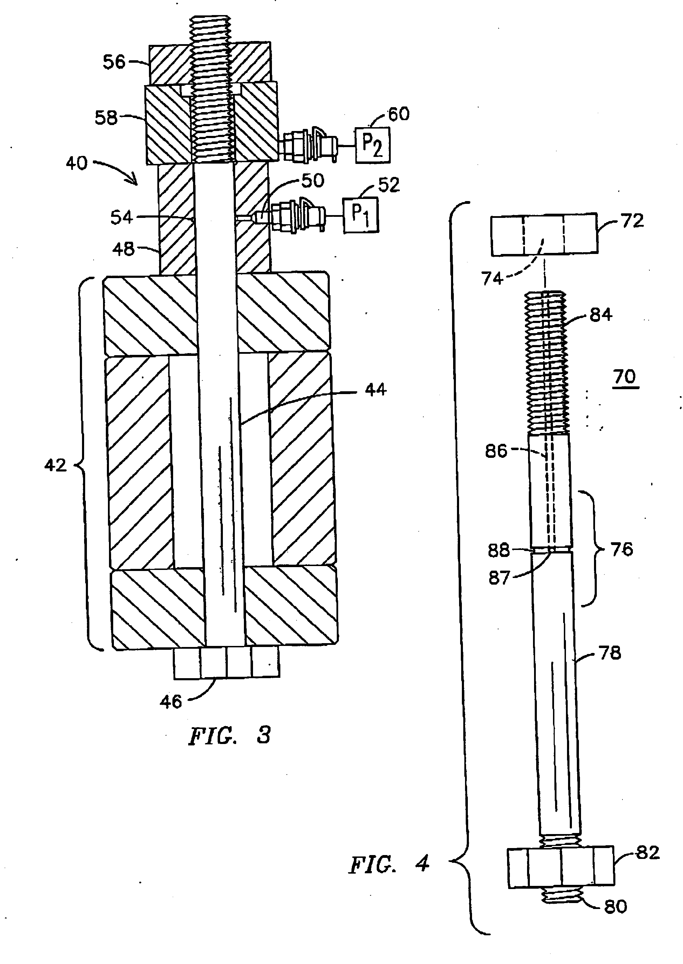

FIG. 3 illustrates a tensioning apparatus 40 being installed across a flange joint assembly 42. The tensioning apparatus 40 includes a shank member 44 having an integrally formed head 46, i.e. commonly called a bolt. The head 46 functions as a means for transferring force against a first side of the flange assembly 42. Alternatively, threads and a removable nut, with or without a washer, may provide this function in order to simplify the installation of the tensioning apparatus 40 into the flange joint assembly 42. Alternatively, a shank member may be threaded into a threaded hole in the flange. These various alternatives for applying force to the side of the joint opposed the annular member 48 are all within the scope of the present invention. The shank member 44 passes through the flange joint assembly 42 and is captured at ambient temperatures by an interference fit with annular member 48. The term ambient temperature is used herein to include both the room temperature during installation and the operating temperature of the shank 44 and nut 48 during the subsequent use of the device that includes flange assembly 42. In some applications the installation and operating temperatures may be significantly different, and the required interference fit and the required working fluid pressures described below must be chosen with such temperatures in mind. Annular member 48 includes a fluid passageway 50 for conveying fluid pressure $P_1$ from a supply of pressurized fluid 52 into an opening such as groove 54 between the annular member 48 and the bolt 44 for selectively expanding the annular member 48 to relax the interference fit. A tensioner nut 56 is threaded onto the distal end of the shank member 44 opposed the head 46, and a tensioner 58 is positioned between the tensioner nut 56 and the annular member 48. Tensioner 58 may be a mechanical device or a commercially available hydraulic tensioner that is powered by pressure $P_2$ from a source of hydraulic pressure 60. The fluid connections may be made through quick release high-pressure fittings as are known in the art. The flange joint assembly 42 is closed and tensioned by applying pressure $P_2$ to tensioner 58 to cause axial expansion between tensioner nut 56 and annular member 48 while pressure $P_1$ is applied to relax the interference fit so that shank member 44 is free to slide axially within the annular member 48 as shank member 44 is pre-loaded and stretched. When the annular member 48 expands, there may be some leakage of the fluid used to provide pressure $P_1$ from between the two mating surfaces. However, by positioning groove 54 proximate the axial center of annular member 48, such leakage may be minimized since the pressure will cause annular member 48 to expand somewhat more near its center, thus allowing the opposed axial ends of the mating surfaces to maintain light contact for limiting fluid leakage. Once a desired amount of tensile force is developed in bolt 44, the pressure $P_1$ is dropped to zero to re-establish the interference fit in order to hold the pre-load, and then pressure $P_2$ is dropped to zero and tension nut 56 and tensioner 58 are removed. The pre-load can be released without the use of tensioner 58 by simply providing pressure $P_1$ to the fluid passageway 50 to allow annular member 48 to expand and to slide axially along shank member 44. A backup nut may be threaded onto the bolt 44 to make contact with annular member 48 once tensioner nut 56 and tensioner 58 are removed in order to provide added assurance against an unintentional release of the pre-load.

Advantageously, the tensioner 58 applies the reaction force for the tension preload directly through the annular member 48 without the need for a bridge, jackbolts, or a complicated multi-piece nut assembly. This arrangement is facilitated by the fact that the annular member 48 need not be rotated during the tensioning process. The tensioner tool 58 pulls on the shank member 44, either directly or through a tensioner nut 56 as in this embodiment, to impart force against the far side of the flange assembly 42 while pushing against the near side of the flange assembly 42 through the annular member 48. Forces are thus imparted on the flange assembly 42 during the tensioning process in the same location and in the same manner as such forces are imparted when the flange assembly 42 is in use. Furthermore, annular member 48 contains no elaborate internal seals and no critical load-bearing threads within the tensioning apparatus load path. The absence of load-bearing threads and jackbolts keeps stresses in the various parts to a generally low level without deleterious stress concentrations.

By imparting the tensioner load directly through the annular member 48 rather than through a parallel load path such as a bridge, the present invention advantageously eliminates an important variable from the joint tensioning process. It is known with prior art systems that when the tensile load is transferred from the bridge or equivalent structure to the nut after the bolt is tensioned, there will be some physical movement or seating of the nut. The effect of the nut seating is that the tensile load/elongation of the shank member will be relaxed to a degree. To accommodate this relaxation, the bolt must be somewhat overstressed by the tensioner operating through the bridge so that the resultant pre-load of the bolt after the nut seats will be the desired value. Such overstressing of the bolt is not necessary with the present invention because the load is directed by the tensioner through the nut 48, thereby causing the nut 48 to seat in during the application of the pre-load. Furthermore, the system of the present invention provides a highly repeatable degree of pre-load in the shank member, for example repeatable to within 1% of the preload value. The hydrostatic film developed between the annular member and the shank member virtually eliminates friction there between during the tensioning process. Accordingly, the full tension developed by the tensioner is transferred to the annular member, and so to the bolt. This was confirmed by comparing the readings from strain gauges attached to the bolt against tensioner calibration data.

With prior art systems, the total bolt elongation during tensioning must be equal to the final required bolt elongation plus the expected deflection of the nut as it seats in. An overstress ratio or tensioner inefficiency ratio may be defined as:

$$\text{(nut deflection + required bolt elongation) / require bolt elongation.}$$

The working fluid pressure in the tensioner must be adjusted upward to account for this inefficiency. Furthermore, the impact of the nut deflection is more pronounced for a short bolt than for a longer bolt. For example, a 1,016m (40 inch) long bolt having a 76,2 mm (3 inch) nominal bolt diameter will exhibit an elongation of 1,52mm (0.06 inch) when pre-loaded to a desired value. To achieve the required pre-load in the bolt, a tensioner working fluid pressure of 137 895 kPa (20,000 psi) may be required with a particular tensioner. However, the expected nut deflection of 0,177 mm (0.007 inch) (112% overstress ratio) necessitates a further stretching of the bolt thus necessitating an increase of tensioner working fluid pressure to 154 442 KPa (22,400 psi). For the same bolt diameter but with only a 254 mm (10 inch) bolt length, the elongation under the desired pre-load would be 0,038 mm (0.015 inch). This elongation plus the expected nut deflection of 0,177 mm (0.007 inch) results in an overstress ratio of 147%. The overstress ratio is higher for the shorter bolt because the required bolt elongation gets smaller while the nut deflection stays constant. The working fluid pressure required in the tensioner to achieve this amount of overstress is 202 243 KPa (29,333 psi) for this example. Thus, with prior art systems it is necessary to use a different working pressure in the tensioner for each different length of bolt. The present invention avoids this variable by causing the nut to seat during the tensioning process, thereby allowing the tensioner working fluid pressure to be determined by the required pre-load alone. Thus, the same working fluid pressure may be used for any given bolt diameter/pre-load regardless of the bolt length. It must be understood that the tensioner used to apply this pressure must be able to accommodate different elongation values for different bolt lengths, however, the force applied by the tensioner to achieve a given pre-load will be the same for all bolt lengths without regard for an overstress ratio.

FIG. 4 illustrates another embodiment of a partially assembled tensioning apparatus 70 having an annular member 72 defining an opening 74 (hidden but shown in phantom) sized to have an interference fit with a mating portion 76 of a shank member 78. The shank member 78 is a stud with a threaded end 80 engaged with a nut 82 and an opposed threaded end 84 available for engagement with a hydraulic tensioner (not shown). In this embodiment, a fluid passageway is formed to include an axial hole 86 extending from an end of the shank member 78 and intersecting a radial hole 87. The radial hole 87 extends to intersect a groove 88 formed along the outside surface of the shank member 78 within the mating portion 76. A fluid pressure may be applied through the fluid passageway 86, 87, 88 to selectively expand annular member 72 sufficiently to relax the interference fit.

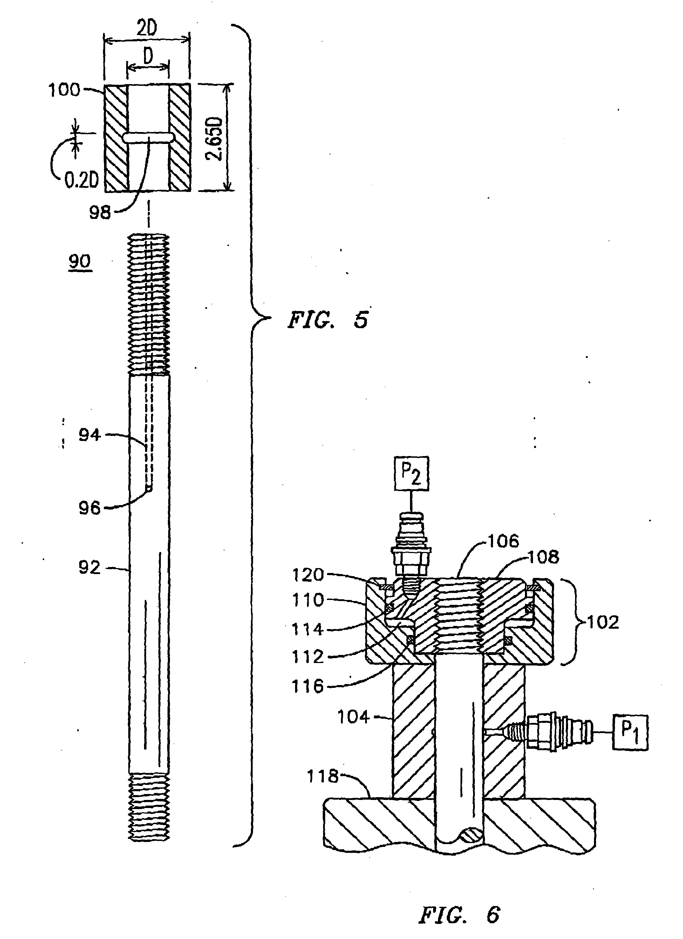

FIG. 5 illustrates another embodiment of a tensioning apparatus 90 including a stud shank member 92 having an internally formed fluid passageway 94. The fluid passageway 94 extends along the axial length of the shank member 92 (seen in phantom) to a radial hole 96. The passageway 94 is in fluid communication with groove 98 formed 360° circumferentially around the inside surface of the annular member 100. When annular member 100 is in position with an interference fit around shank member 92, the groove 98 will be aligned with hole 96 and in fluid communication with fluid passageway 94. Groove 98 has an axial extent that is sufficient to permit axial movement between annular member 100 and shank member 92 during tensioning of shank member 92 while still maintaining fluid communication between fluid passageway 94 and groove 98. In one embodiment, for a shank member 92 having diameter D, annular member may have diameter of approximately 2D and a height of approximately 2.65D, and groove 98 may have an axial extent of approximately 0.2D.

FIG. 6 illustrates the use of a low-profile tensioner 102 that bears upon an annular member 104 to perform a tensioning operation while the annular member 104 is expanded by an applied hydraulic pressure $P_1$ to relax its interference fit with a shank member 106. The tensioner 102 includes a piston portion 108 threadably engaged with shank member 106 and moveable within a cylinder portion 110 in response to fluid pressure $P_2$. The fluid pressure is maintained in pressure chamber 112 by upper seal 114 and lower seal 116, causing piston 108 to move upward to pre-load shank member 106 and flange while applying a reaction force downward directly against annular member 104. Sample calculations performed for a shank member having a diameter of 38,1 mm (1.5 inch) demonstrate that a shank prestress of 310 264 KPa (45,000 psi) can be achieved with a working pressure $P_2$ of 137 895 KPa (20,000 psi) and a tensioner piston area of 25,65 cm² (3.976 in²). This arrangement requires an inner seal diameter of 57,15 mm (2.25 inch) and an outer seal diameter of 80,82 mm (3.182 inch), and a tensioner outside diameter of 56,52 mm (3.8 inches). Shank elongation of 0,58 mm (0.023 inches) is required to achieve the target preload with a shank effective length of 387,35 mm (15.25 inches), and this would necessitate an overall height of the tensioner 102 of only about 38,1 mm (1.5 inches). Retainer 120 may accommodate a conservative overall piston travel limit of 4,76 mm (0.1875 inch) to keep piston 108 and cylinder 110 together when not in use. With annular member 104 having a nominal diameter of 76,2 mm (3 inches), the nut contact stress would be 103421 kPa (15,000 psi).

FIG. 7 is a cross-sectional view of an annular member 130 that may be used with a tensioning apparatus as described above. The annular member 130 includes an outside surface 132 and an inside surface 134 defining a generally cylindrical bore for accepting a shank member in an interference fit. A plurality of grooves are formed along the inside surface 134. A first groove 136 is formed along an axial centerline of the annular member 130 and is in fluid communication with a hole 138 used to deliver a fluid pressure into the bore. A second groove 140 is formed to be essentially parallel to the first groove 136 and is in fluid communication with the first groove 136, such as by being interconnected therewith via longitudinal groove 142. Additional axial and longitudinal grooves may be provided as desired to achieve a desired distribution of the pressure applied through hole 138 across the bore. The grooves are shaped to avoid stress concentrations, for example by having a radius (e.g. 1,52 mm (0.06 inch)) that is greater than a depth (e.g. 1,02 mm (0.04 inch)) so that the edges form less than a right angle. The edges may be given a further radius (e.g. 0,51 mm (0.02 inch)) to eliminate any sharp edge. In one embodiment, three axial grooves 136, 140, 144 are interconnected by two longitudinal grooves 142 that are diagonally opposed from each other and equally spaced from hole 138. Grooves 140, 144 may be located closer to their respective axial ends of annular member 130 than to groove 136 located at the axial centerline in order to facilitate the expansion of the bore over the majority of its length, leaving only relatively small end areas of the insider surface 134 to function as a seal for maintaining the pressure within the bore. In one embodiment for an annular member 130 having an axial length of 101,6 mm (4 inches), the end grooves 140, 144 may be axially removed from the axial centerline groove 136 by about 30,48 mm (1.2 inches) respectively, leaving about 20,32 mm (0.8 inches) from the centerlines of grooves 140, 144 to the respective axial ends of the annular member 130.

In order to reduce or to eliminate leakage of the pressurized fluid from between the annular member 130 and a mating shank member (not shown in FIG. 7) when the bore is pressurized during a tensioning operation, it may be desired to add a seal 146 at opposed axial ends of the bore. O-ring seals 146 are illustrated as being inserted into respective grooves 149 formed along the inside surface 134 of the annular member. Alternatively, such grooves may be formed in the mating shank member. Other types of seals may be used, for example lip seals, bellows seals, spring seals, brush seals, etc. and they may be formed of any known material appropriate for the environmental conditions of the particular application. Such seals are preferably located close to the axial ends of the annular member 130, for example 2,54 mm (0.1 inch) on center from the respective end.

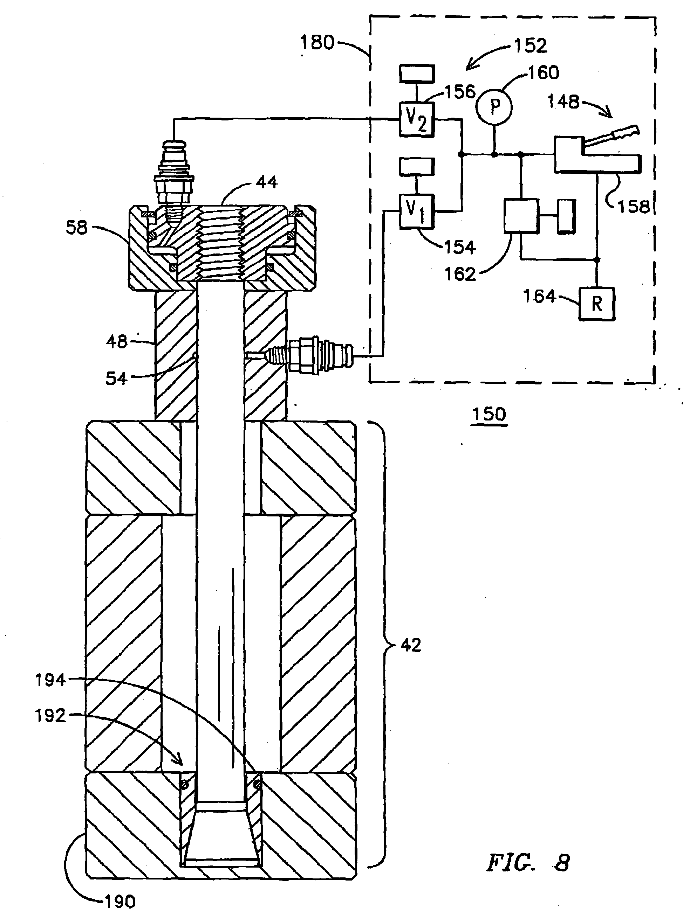

A flange tensioning system 150 is illustrated in FIG. 8 in a configuration that utilizes a single source 148 of fluid pressure P that is selectively fluidly connected to the annular member 48 and to the tensioner 58 through a valve arrangement 152 such as needle valves 154 and 156 respectively connected to the annular member 48 and tensioner 58. The source of pressure 148 may include a high-pressure hand pump 158 that is manually operated with reference to a pressure gauge 160. A bypass valve 162 is provided around pump 158 to return fluid to reservoir 164.

In one test configuration, a 38,1 mm (1.50 inch) diameter X 8UN (American standard) bolt was tensioned using a Model 48000-0001-000 hydraulic pump manufactured by Hydratight Sweeney Limited using mineral oil as a working fluid. A 76,2 mm (3.00 inch) outside diameter nut was machined to provide an interference fit of 0,089-0,094 (0.0035-0.0037 inches) with the critical length portion of the shank member 44. The critical length portion of the bolt was machined to 41,28 mm (1.625 inches). The nut had an aspect ratio of 3.0 and was formed with three circumferential spaced-apart grooves interconnected by two axial grooves in fluid communication with a hole drilled through the nut wall to its outside surface. The nut was assembled onto the bolt and the needle valve 154 was opened with needle valve 156 closed and the system was pressurized to 220632 kPa (32,000 psi) to establish an oil film between the nut and bolt, at which point the nut 48 was expanded sufficiently to relax the interference between nut 48 and shank member 44 to allow relative movement there between. Valve 154 was then closed. The nut 48 was able to retain the pressurized oil in the groove 54 because the viscosity of the oil is increased at this high pressure and the oil film developed between the nut 48 and the shank member 44 is retained without significant leakage. An oil film thickness of 0,015mm (000585 inches) was calculated. There is an upper limit on the pressure that can be developed within groove 54, because at a certain point, dependent upon the geometry and the fluid characteristics, any further attempt to increase the pressure simply causes fluid to escape from between the nut 48 and shank member 44, and further action of the pump 158 simply pumps fluid through the system.

Needle valve 156 was then opened on the test configuration and the pressure in the system dropped as the fluid pressurized the tensioner 58. The pump 158 was operated to recover the pressure to 148237 kPa (21,500 psi), thereby tensioning the shank member 303369 to 310264 kPa (44 to 45,000 psi), as confirmed by measurements taken from a strain gauge. The fact that the shank member 44 was properly stretched confirmed that the pressure in groove 54 had been maintained to a level sufficient to keep the interference fit relaxed. As a result of the Poisson ratio effect, the diameter of the shank member 44 is reduced as it is tensioned to 310264 kPa (45,000 psi). As the bolt diameter is reduced, the pressure in groove 54 will decay somewhat from the original 220 632 kPa (32,000 psi) due to the larger volume occupied by the trapped fluid. However, the pressure needed to release the interference fit is also reduced as the bolt diameter is decreased. Advantageously, the test configuration components were designed so that the decreasing pressure existing in the groove 54 as the shank member 44 was stretched remained adequate for keeping the interference fit relaxed as the bolt diameter decreased. Note also that the peak pressure that can be maintained in the groove 54 when the shank member 44 is stretched will be less than that which be maintained when the shank member 44 is unloaded.

Valve 154 was then reopened with valve 156 still open to bring the pressure in groove 54 to 148237 kPa (21,500 psi). Note that this pressure is less than the 220632 kPa (32,000 psi) originally used to establish the oil film between the nut 48 and shank member 44 and to initially release the interference fit. The tensioner 58 was purposefully designed to provide the desired tension in the shank member 44 at a working fluid pressure that is no more than the working fluid pressure needed to relax the interference fit once the shank member 44 is stretched. Thus, the test configuration system can be operated with a single source of working fluid pressure 148 that supplies both the tensioner 58 and the annular member 48 because the pressure of 148237 kPa (21,500 psi) is adequate for both stretching the shank member 44 and for eliminating the interference fit once the bolt is stretched. Once the shank member 44 is tensioned, valve 156 is closed to maintain the pressure in the tensioner 58, the system pressure is reduced to zero, such as by opening bypass valve 162, and the interference fit is reestablished since valve 154 is open there is a release of pressure in the groove 54. It takes a finite amount of time for the working fluid to move out of groove 54 through fluid passageway 50. In the test configuration, it was found that two minutes after opening valve 154 the interference fit had returned to the point where the tensioner 58 could be depressurized by opening valve 156 without movement of the nut on the shank. This was confirmed by the fact that the strain gauge was still indicating that the bolt was correctly pre-loaded. It is anticipated that the degree of interference will gradually increase to its full potential over time as the oil film between the nut and bolt gradually flows out of fluid passageway 50. A time period of one hour was found to be adequate to develop the full load-carrying capability of the interference fit when mineral oil was used as the working fluid. The stud-over-nut length, i.e. the distance that the bolt extends above the top of the nut, may be measured after completion of the tensioning operation to confirm proper functioning of the system. The stud-over-nut length will increase to a predetermined value once the bolt is properly pre-loaded. For the test configuration, the initial stud-over-nut length with the bolt relaxed was 36,58 mm (1.440 inches), and it increased by 0,81 mm (0.032 inches) after the bolt was stretched. To release the pre-load, pressure is re-established between the shank member 44 and the nut 54. When the interference is relaxed sufficiently to allow relative movement between the shank member 44 and the nut 54, an audible click may be heard indicating that the preload has been relaxed. Advantageously, the pre-load may be relaxed without the use of the full tensioning system 150, since all that is required to unload the pre-load is that an adequate pressure be provided to the nut 54. This may be helpful for applications such as gas turbine casing flange bolts where an unexpected outage may necessitate the rapid disassembly of the turbine.

FIG. 6 illustrates how the relationship between the pressure $P_2$ provided to the pressure chamber 112 and the tensioning force exerted on a shank member 106 can be affected by selecting the geometry of the pressure chamber 112 so that a desired cross-sectional area of piston 108 is exposed to the pressure $P_2$. In practice, a bolting system may be designed by knowing the required closing force; selecting a shank member to carry that closing force; designing an annular member to have an interference fit sufficient to resist the closing force; determining the amount of working pressure needed to release the interference fit once the shank member is stretched under the closing force; and then designing a tensioner to provide the desired closing force tension on the shank member with a working fluid at that working pressure. For the test configuration described above, the tensioner was designed to have a piston area of 17,26 cm$^2$ (2.675 in$^2$).

The tensioning apparatus of the present invention is adaptable for remote tensioning applications, such as underwater, nuclear or other hazardous environments, because there is no need to rotate the nut to achieve tensioning, because there is no need for a bridge to carry the load between the bolt and the tensioner, and because the critical surfaces between the nut and shank are protected. One such remotely controlled system 170 illustrated in FIG. 9 provides hands-free tensioning of nut 172 and bolt 174 across flanged joint 176. A controller 178 is programmed to sequence the operation of a pressure supply 180 for providing fluid pressure to the nut 172 and tensioner 182. The pressure supply 180 may include a pump or other supply of pressurized fluid, and one or more remotely controllable valves, such as the components included within the dashed lines in FIG. 8. The controller 178 may also be used to control the operation of a robotic arm 184 for picking/placing the tensioner 182 into position on the bolt 174. A camera 186 may be used to provide visual information on display 188 for use by an operator. Remote tensioning is further facilitated by the use of a blind hole 192 in the bottom flange member 190 for receiving shank member 44. A tapered collet assembly 194 is installed on the distal end of shank member 44 for making frictional engagement with the bottom flange member 190 as the shank member 44 is tensioned. An alternative embodiment may use a shear pin assembly as described in United States patent 6,287,079 for engagement with the blind hole 192. For embodiments with a through hole in the bottom flange member, a split ring or split nut assembly may be used to engage the shank member for ease of remote assembly.

The use of a single source of pressure 148 as shown in FIG. 8 provides a passive protection against overstressing, of the shank member 44. This occurs when both valves 154 and 156 are open and the pressure being supplied to the tensioner 58 and to the nut 48 is thereby equilibrated. In the event that the system pressure inadvertently begins to rise beyond the design value, the shank member 44 will elongate due to the increasing pressure in the tensioner 48. As a result of Poisson's ratio, the bolt diameter will also decrease, thus causing the maximum pressure-retaining capability of the nut 48 to decrease and causing leakage of the working fluid from between the nut 48 and shank member 44. This interaction is self-limiting on pressure, since as the pressure increases, the pressure retaining capability of the nut will also decrease causing increasingly more leakage, until finally the system's volume capacity is exceeded and the pressure increase is self-terminated.

Water may be used as the working fluid in lieu of mineral oil provided the materials of construction of the various components of the system are not subject to corrosion. Pure water will evaporate without leaving a residue in the system components. Water with or without additives such as corrosion-prohibiting formulas may be used. Water has a viscosity of only about one hundredth of that of mineral oil at atmospheric pressure, and it is expected that at the high pressures envisioned herein its viscosity will be at least an order of magnitude or perhaps two orders of magnitude less than that of mineral oil. The resulting thinner (when compared to oil) fluid film formed by water between the nut and the shank necessitates a smaller amount of overpressure in order to release the interference fit there between upon initial pressurization. This lower pressure requirement may be exploited by using a lower pressure in the working fluid and/or by increasing the interference fit between the nut and the shank for increased load carrying capability without the need for an increased working fluid pressure. Furthermore, water may require less time to flow away from the nut once pressure is reduced to zero, thereby achieving initial and maximum holding capabilities in a shorter time period after depressurization than would a system using mineral oil. This time savings may be a few minutes or up to an hour in some embodiments.

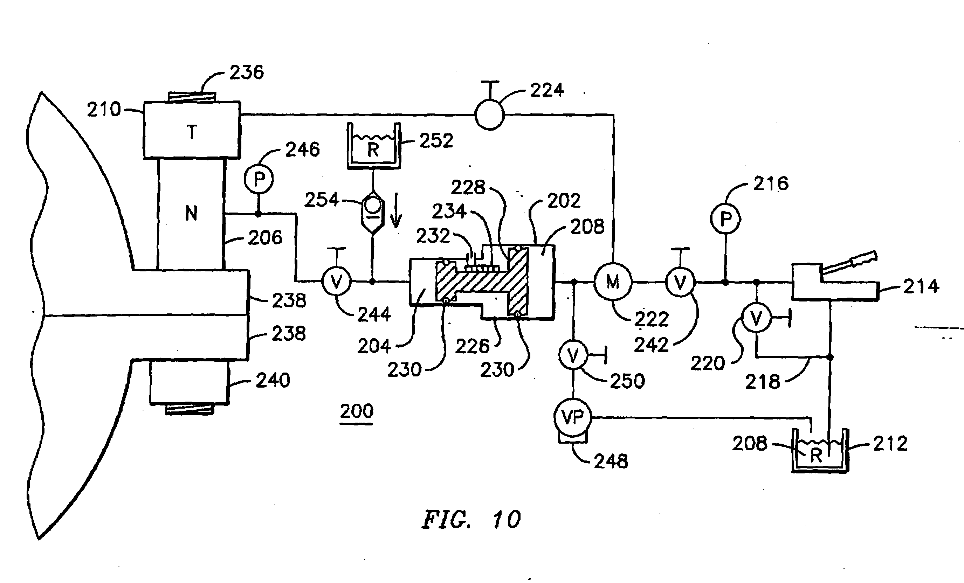

FIG. 10 is a schematic illustration of a tensioning system 200 that includes an oil/water pressure converter 202 for providing water 204 as a working fluid to an annular member 206 and oil 208 as a working fluid to tensioner 210. Oil 208 is drawn from an oil reservoir 212 and pressurized by oil pump 214 to a desired pressure as indicated on pressure gauge 216. A bypass line 218 around pump 214 includes isolation valve 220. A manifold directs the pressurized oil both to the tensioner 210 through isolation valve 224 and to the oil/water pressure converter 202. The oil/water pressure converter 202 includes a cylinder 226 and a piston 228 disposed therein. The piston 228 is free to move axially along the bore of the cylinder 226 and is provided with conventional fluid seals 230 so that when the oil 208 is pressurized, the piston 228 is free to transmit the pressure to the water 204 with negligible sensible pressure loss and without intermixing of the oil 208 and water 204. Oil/water pressure converter 202 may transmit the same pressure from the oil 208 to the water 204, or as schematically represented in FIG. 10, it may transmit an increased pressure from the oil 208 to the water 204 as a result of a difference in the piston area upon which the respective fluids are acting. The central region of the cylinder 226 may contain an opening 232 for venting and draining the space between the oil and water sides of the piston 228. Witness marks 234 or another type of piston position indicator may be located on the piston 228 for viewing through the opening 232. The oil/water pressure converter 202 may be designed by utilizing conventional high-pressure hydraulic system technology, and it may be designed to use conventional high-pressure hydraulic hose and quick release fittings to allow a water-based annular member 206 to interface with commercially available oil-based tensioning or torque-generating equipment.

A shank member 236 may be tensioned across mating flange members 238 using tensioning system 200. Annular member 206 is pre-positioned onto shank member 236 with a desired interference fit. Shank member 236 is inserted through aligned holes formed through mating flange members 238 and retaining nut 240 is threaded onto a protruding portion of the shank member 236. Tensioner 210 is then installed onto the opposed end of shank member 236 and connected to tensioning system 200. With isolation valves 242 and 244 open and isolation valve 224 closed, pump 214 is operated to provide oil pressure to oil/water pressure converter 202 and thus an augmented water pressure to annular member 206. The pressure is increased to a value $P_1$ sufficient to release the interference fit between annular member 206 and shank member 236. Isolation valve 244 is then closed and isolation valve 224 is then opened, and the pressure in the system as indicated by pressure gauge 216 is recovered to a value $P_2$ necessary to tension shank member 236 to a desired value. Pressure $P_1$ may be a different value than pressure $P_2$ and it may be higher in some embodiments. However, in embodiments where oil/water pressure converter 202 also increases the pressure in the water compared to that of the oil, pressures $P_1$ and $P_2$ may be designed to be the same, and preferably being no more than a value that can be obtained with a commercially available oil pump 214. During this tensioning step, pressure gauge 216 is isolated from the water pressure in annular member 206, and it may be desirable to provide a water pressure gauge 246 to confirm that a sufficient pressure is maintained in the annular member 206 to allow the shank member 236 to move freely within annular member 206. Once shank member 236 is properly stretched, isolation valve 224 is closed, isolation valve 244 is opened, and the pressure in the system is reduced to zero to reestablish the interference fit. After a suitable time delay for the water to flow from between annular member 206 and shank member 236, the pressure can be released from tensioner 210 by opening isolation valve 224 and the tensioning system 200 including tensioner 210 removed.

The process described in the previous paragraph may be further simplified if the system components are selected so that $P_1$ and $P_2$ have the same value. In particular, the system may be initially pressurized with both isolation valves 224 and 244 open, thereby allowing the pressure in the tensioner 210 and the annular member 206 to increase together. Although this variation has never been tested by the present inventor, it is believed that there may be an audible sound when the pressure increases to a point where the interference fit is released and the shank member 236 first moves within the annular member 206.

During the tensioning process, piston 228 will tend to move toward the water side of the cylinder 226. The position of piston 228 can be ascertained by viewing the position of witness marks 234 through opening 232. After the system is depressurized, piston 228 can be drawn back toward the oil side of cylinder 226 by operating vacuum pump 248 with isolation valve 250 open and isolation valves 242 and 224 closed. Water 204 may be drawn into the water side of the system from a water reservoir 252 through non-return valve 254.

In a further embodiment of the invention, the material of construction for the annular member may be selected to have a coefficient of thermal expansion that is lower than that of its mating shank member. If the operating temperature of such an embodiment is significantly higher than room temperature, the differential expansion between the two members will increase the interference there between. This phenomenon may be exploited by reducing the required interference fit at room temperature, thereby reducing the required working fluid pressure, or it may simply provide a higher axial load capacity margin. In one embodiment, the shank member may be Inconel® IN-718 alloy having a coefficient of thermal expansion of $14,31 \times 10^{-6}$ ($7.95 \times 10^{-6}$ inches/inch/°F), and the annular member may be alloy 422 stainless steel having a coefficient of thermal expansion of $11,95 \times 10^{-6}$ ($6.64 \times 10^{-6}$ inches/inch/°F). For the embodiment described above having a 38,1 mm (1.50 inch) diameter X 8UN (American standard) bolt, the use of these materials would increase the axial capacity margin from 80% at room temperature to 130% at 510°C (950 °F). without affecting the initial assembly of the nut/shank combination. These materials are corrosion resistant, allowing them to be used with water as the working fluid, and both are commonly used for bolting hardware in high performance/high temperature applications. Moreover, the coefficient of thermal expansion of IN-718 is close to that of steel commonly selected for the construction of engine cylinders and flanges so that the shank member pre-stress achieved at room temperature will be maintained as the engine heats up during operation.

**Claims**

1. A tensioning apparatus (10) for applying a predetermined amount of tensile force to a shank member (12) for preloading an assembly (42) comprising:

   a shank member (12);
   an annular member (48) comprising an opening (18) sized to receive the shank member (12) and engaging therewith by an interference fit sufficient to prevent relative movement therebetween when a predetermined tensioning tensile force is applied; and
   the shank member (12) further comprising means for transferring force against a first side of the assembly (42); and
   wherein the tensioning apparatus further comprises a tensioner (58) for imparting a predetermined amount of tensile force to the shank member (12) to pull on the shank member (12) to impart force against the first side (190) of the assembly while pushing against a second opposed side of the assembly through the annular member (48); and comprising
   a fluid passageway for delivering a pressure between the shank member and the annular member for expanding the opening to relax the interference fit;
   wherein the tensioner (58) is responsive to a second pressure (P2) to apply a force to tension the shank member (12); such that
   a first pressure (P1) is required in the fluid passageway to relax the interference fit when the shank member (12) is relaxed, and a second pressure (P2) lower than the first pressure is required in the fluid passageway to relax the interference fit when the shank member (12) is tensioned; and wherein
the tensioner (58) is selected to provide the predetermined amount of tensile force to the shank member at the second pressure (P2) so that a single pressure source may be used to provide pressure to the fluid passageway and to the tensioner to achieve the desired preload in the shank member (12).

2. The tensioning apparatus of claim 1, further comprising:

   a pump;
   a first valve (V1) connected between the pump and the fluid passageway; and
   a second valve (V2) connected between the pump and the tensioner (58).

3. The tensioning apparatus (10) of claim 1, wherein the tensioner (58) further comprises:

   a piston (108) disposed within a cylinden (110) to define a pressure chamber;
   a first of the piston and cylinder connected to the shank member (12) for applying the force to tension the shank member (12) and a second of the piston and cylinder connected to the annular member (14) for applying a reaction force through the annular member (14).

4. The tensioning apparatus (10) of claim 3, further comprising:

   a pump (160);
   a first valve (V1) connected between the pump (160) and the fluid passageway; and
   a second valve (V2) connected between the pump (160) and the pressure chamber.

5. The tensioning apparatus (10) of claim 4, wherein the pump (160), first valve (V1) and second valve (V2) comprise a pressure supply, and further comprising a controller for remotely operating the pressure supply.

6. A method for applying a predetermined amount of tensile force to a shank member (12) for preloading an assembly (42) comprising the steps of:

   a) providing a tensioning apparatus as claimed in any one of claims 1 to 5;
   b) placing the tensioning apparatus at the assembly(42);
   c) expanding the opening of the annular member with a first pressure to relax the interference fit
   d) applying a second pressure to the tensioner to apply the predetermined amount of tensile force to the shank member (12) to pull on the shank member (12) to impart force against the first side (190) of the assembly while pushing against a second opposed side of the assembly through the annular member (48);
   e) releasing the first pressure to reestablish the interference fit to retain the shank member tension when the second pressure is relaxed; and
   f) releasing the second pressure.


**Patentansprüche**

1. Spannvorrichtung (10) zum Anwenden einer Zugkraft einer vorab festgelegten Größe auf ein Schaftelement (12), um eine Baugruppe (42) vorzuspannen, die folgendes umfasst:

   ein Schaftelement (12);
   ein ringförmiges Element (48), das eine Öffnung (18) besitzt, welche derart bemessen ist, dass sie das Schaftelement (12) aufnimmt und durch eine Wirkverbindung, welche ausreicht, um eine relative Bewegung zwischen beiden zu verhindern, mit dieser in Eingriff gelangt, wenn eine vorab festgelegte Zugkraft angewandt wird; und wobei das Schaftelement (12) ferner Mittel zum Übertragen von Kraft auf eine erste Seite der Baugruppe (42) umfasst; und
   wobei die Spannvorrichtung ferner ein Spannelement (58) umfasst, um eine Zugkraft einer vorab festgelegten Größe an das Schaftelement (12) weiterzugeben, um an dem Schaftelement (12) zu ziehen und so Kraft auf eine erste Seite (190) der Baugruppe zu übertragen und dabei gleichzeitig mittels des ringförmigen Elements (48) gegen eine zweite, gegenüberliegende Seite der Baugruppe zu drücken; und
   welche folgendes umfasst:

einen Flüssigkeits-Durchflusspfad, um einen Druck zwischen dem Schaftelement und dem ringförmigen Element bereitzustellen und die Öffnung zu erweitern, um die Wirkverbindung zu lockern;

wobei das Spannelement (58) auf einen zweiten Druck (P2) anspricht, um eine Kraft zum Spannen des Schaftelements (12) anzuwenden; sodass

ein erster Druck (P1) in dem Flüssigkeits-Durchflusspfad erforderlich ist, um die Wirkverbindung zu lockern, wenn das Schaftelement (12) entspannt ist, und ein zweiter Druck (P2), der niedriger ist als der erste Druck (P1), in dem Flüssigkeits-Durchflusspfad erforderlich ist, um die Wirkverbindung zu lockern, wenn das Schaftelement (12) gespannt ist; und wobei

das Spannelement (58) derart ausgewählt ist, dass die Zugkraft der vorab festgelegten Größe bei dem zweiten Druck (P2) an das Schaftelement bereitgestellt wird, sodass eine einzelne Druckquelle eingesetzt werden kann, um Druck in den Flüssigkeits-Durchflusspfad und an das Spannelement bereitzustellen und die gewünschte Vorspannung in dem Schaftelement (12) zu erzielen.

2. Spannvorrichtung (10) gemäß Anspruch 1, welche ferner folgendes umfasst:

eine Pumpe;
ein erstes Ventil (V1), das zwischen der Pumpe und dem Flüssigkeits-Durchflusspfad angeordnet ist; und
ein zweites Ventil (V2), das zwischen der Pumpe und dem Spannelement (58) angeordnet ist.

3. Spannvorrichtung (10) gemäß Anspruch 1, wobei das Spannelement (58) ferner folgendes umfasst:

einen Kolben (100), der in einem Zylinder (110) angeordnet ist, um eine Druckkammer zu definieren;
einen ersten Kolben und Zylinder, der mit dem Schaftelement (12) verbunden ist, um eine Kraft zum Spannen des Schaftelements (12) anzuwenden, und einen zweiten Kolben und Zylinder, der mit dem ringförmigen Element (14) verbunden ist, um eine Reaktionskraft durch das ringförmige Element (14) anzuwenden.

4. Spannvorrichtung (10) gemäß Anspruch 3, welche ferner folgendes umfasst:

eine Pumpe (160);
ein erstes Ventil (V1), das zwischen der Pumpe (160) und dem Flüssigkeits-Durchflusspfad angeordnet ist; und
ein zweites Ventil (V2), das zwischen der Pumpe (160) und der Druckkammer angeordnet ist.

5. Spannvorrichtung (10) gemäß Anspruch 4, wobei die Pumpe (160), das erste Ventil (V1) und das zweite Ventil (V2) einen Druckvorrat umfassen und ferner eine Steuerungseinrichtung umfassen, um den Druckvorrat per Fernzugriff zu bedienen.

6. Verfahren zum Anwenden einer Zugkraft einer vorab festgelegten Größe auf ein Schaftelement (12), um eine Baugruppe (42) vorzuspannen, wobei das Verfahren die folgenden Schritte umfasst:

a) eine Spannvorrichtung gemäß einem der Ansprüche 1 bis 5 bereitzustellen;
b) die Spannvorrichtung an der Baugruppe (42) zu platzieren;
c) die Öffnung des ringförmigen Elements mit einem ersten Druck zu erweitern, um die Wirkverbindung zu lockern;
d) das Spannelement mit einem zweiten Druck zu beaufschlagen, um die Zugkraft von vorab festgelegter Größe auf das Schaftelement (12) anzuwenden, um an dem Schaftelement (12) zu ziehen und so Kraft auf eine erste Seite (190) der Baugruppe zu übertragen und dabei gleichzeitig mittels des ringförmigen Elements (48) gegen eine zweite, gegenüberliegende Seite der Baugruppe zu drücken;
e) den ersten Druck aufzuheben, um die Wirkverbindung wiederherzustellen und die Spannung des Schaftelements aufrecht zu erhalten, wenn der zweite Druck gelockert wird; und
f) den zweiten Druck aufzuheben.

**Revendications**

1. Appareil de mise en tension (10) pour appliquer une quantité prédéterminée de force de traction à un élément formant tige (12) pour précontraindre un ensemble (42) comprenant :

un élément formant tige (12) ;

un élément annulaire (48) comprenant une ouverture (18) dimensionnée pour recevoir l'élément formant tige (12) et y être solidarisé par un ajustement serré suffisant pour éviter un mouvement relatif entre eux quand une force de traction de mise en tension prédéterminée est appliquée, et

l'élément formant tige (12) comprenant par ailleurs des moyens pour transférer la force à un premier côté de l'ensemble (42), et

étant entendu que l'appareil de mise en tension comprend par ailleurs un tensionneur (58) pour communiquer une quantité prédéterminée de force de traction à l'élément formant tige (12) afin de tirer sur l'élément formant tige (12) pour transférer une force sur le premier côté (190) de l'ensemble tout en poussant sur un second côté opposé de l'ensemble au travers de l'élément annulaire (48), et comprenant :

un passage pour fluide pour fournir une pression entre l'élément formant tige et l'élément annulaire afin d'élargir l'ouverture pour relâcher l'ajustement serré ;

étant entendu que le tensionneur (58) réagit à une seconde pression (P2) pour appliquer une force afin de mettre en tension l'élément formant tige (12), de telle sortie :

qu'une première pression (P1) est requise dans le passage pour fluide afin de relâcher l'ajustement serré lorsque l'élément formant tige (12) est relâché, et qu'une seconde pression (P2) inférieure à la première pression est requise dans le passage pour fluide afin de relâcher l'ajustement serré lorsque l'élément formant tige (12) est mis en tension, et étant entendu que :

le tensionneur (58) est choisi pour fournir la quantité prédéterminée de force de traction à l'élément formant tige à la seconde pression (P2) de telle sorte qu'une seule source de pression puisse être utilisée pour fournir de la pression au passage pour fluide et au tensionneur pour atteindre la précontrainte voulue dans l'élément formant tige (12).

2. Appareil de mise en tension selon la revendication 1, comprenant par ailleurs :

une pompe ;

une première soupape (V1) montée entre la pompe et le passage pour fluide, et

une seconde soupape (V2) montée entre la pompe et le tensionneur (58).

3. Appareil de mise en tension (10) selon la revendication 1, dans lequel le tensionneur (58) comprend par ailleurs :

un piston (108) disposé à l'intérieur d'un cylindre (110) pour définir une chambre sous pression ;

un premier piston-et-cylindre raccordé à l'élément formant tige (12) pour appliquer la force pour mettre en tension l'élément formant tige (12) et un deuxième piston-et-cylindre raccordé à l'élément annulaire (14) pour appliquer une force de réaction à travers l'élément annulaire (14).

4. Appareil de mise en tension (10) selon la revendication 3, comprenant par ailleurs :

une pompe (160) ;

une première soupape (V1) montée entre la pompe (160) et le passage pour fluide, et

une seconde soupape (V2) montée entre la pompe (160) et la chambre sous pression.

5. Appareil de mise en tension (10) selon la revendication 4, dans lequel la pompe (160), la première soupape (V1) et la seconde soupape (V2) comprennent une alimentation en pression, et comprenant par ailleurs un dispositif de commande pour faire fonctionner à distance l'alimentation en pression.

6. Procédé pour appliquer une quantité prédéterminée de force de traction à un élément formant tige (12) pour précontraindre un ensemble (42) comprenant les étapes consistant :

a) à fournir un appareil de mise en tension selon l'une quelconque des revendications 1 à 5 ;

b) à placer l'appareil de mise en tension au niveau de l'ensemble (42) ;

c) à dilater l'ouverture de l'élément annulaire par une première pression pour relâcher l'ajustement serré ;

d) à appliquer une seconde pression au tensionneur pour appliquer la quantité prédéterminée de force de traction à l'élément formant tige (12) pour tirer sur l'élément formant tige (12) pour transférer une force sur le premier côté (190) de l'ensemble tout en poussant sur un second côté opposé de l'ensemble au travers de l'élément annulaire (48) ;

e) à relâcher la première pression pour rétablir l'ajustement serré afin de conserver la tension de l'élément formant tige lorsque la seconde pression est relâchée, et

f) à relâcher la seconde pression.

FIG. 1

FIG. 2

FIG. 7

56
58
40
54
48
42
44
46

*FIG. 3*

60
$P_2$

50
52
$P_1$

72
74
84
70
86
88
87
76
78
82
80

*FIG. 4*

FIG. 5

FIG. 6

FIG. 8

184 — Picker

174 —

182 — Tensioner

172 —

176

176

174

186

188 — Display

Controller

178

Pressure Supply

170

180

FIG. 9

264 —

260

266

262 —

260

268

270

272

274

FIG. 11

FIG. 10

**EP 1 631 420 B1**

## REFERENCES CITED IN THE DESCRIPTION

**Patent documents cited in the description**

- JP 58203214 A

- US 6287079 B

**Non-patent literature cited in the description**

- **Lancaster ; Mitchell.** The Mechanics of Materials. McGraw-Hill Publishing Company, 1967